# EUROPEAN PATENT APPLICATION

(11) **EP 2 372 834 A1**
(43) Date of publication of application: **05.10.2011**
(21) Application number: 09834237.1
(22) Date of filing: 22.06.2009
(51) Int. Cl.: H01Q 1/24, H04M 1/02

(54) **PORTABLE WIRELESS APPARATUS**

(30) Priority: 26.12.2008 JP 2008334010
(71) Applicant: Panasonic Corporation, Kadoma-shi Osaka 571-8501 (JP)
(72) Inventor: SUMI, Shingo, Osaka 540-6207 (JP)
(74) Representative: Grünecker, Kinkeldey, Stockmair & Schwanhäusser Anwaltssozietät
(86) International application number: PCT/JP2009/002827
(87) International publication number: WO 2010/073418

(57) **Abstract**

Disclosed is a portable wireless apparatus that can be miniaturized and that can achieve high antenna performance even when the antenna and circuit board overlap in the vertical direction. In this apparatus, a second case (102) is mounted so as to be slidable with respect to a first case (101). An antenna (106) is provided on the second case (102). A circuit board (104) is provided on the first case (101) and has a slit (108) that extends in the direction intersecting the sliding direction, at the boundary of a region (r1) including a region opposite the antenna (106) in the vertical direction and a region (r2) other than this region (r1), when the first case (101) and second case (102) are overlapping and closed.

## Description

### Technical Field

The present invention relates to a portable radio device. More particularly, the present invention relates to a portable radio device in which multiple casings are connected with each other in a slidable fashion and are placed in an open state and a closed state in accordance with slide operations.

### Background Art

Conventionally, a portable radio device formed with two casings which are placed in a mutually slidable fashion is known. With this slide portable radio device, there is a problem that an antenna provided in one casing and a circuit board arranged in the other casing are placed close to each other and cause deterioration of antenna performance. This deterioration of antenna performance arises from the fact that the circuit board in one casing where an antenna is provided and the circuit board in the other casing are placed close to each other and are capacitively coupled, or are connected by a connecting cable for transmitting information, and consequently the impedance of the circuit board facing an antenna in a vertical direction is decreased, so that radiation resistance of antenna is decreased.

The above problem is especially notable with this slide portable radio device for the following reasons. Thus, the major reasons include that when a slide portable radio device is in an open state, circuit boards partly overlap each other and are prone to couple electromagnetically with each other, and that, given that slide mechanism component to allow slide operations are in most cases metallic to maintain its strength, the circuit boards are prone to couple electromagnetically with each other through a slide portable radio device.

Also, a portable radio device, which, in one casing to prevent antenna performance from deteriorating, provides a ground wire in a position close to an antenna that is provided in the other casing and improves radiation efficiency of the antenna, is known (for example, PTL 1).

### Citation List

### Patent Literature

PTL1
   Japanese Patent Application Laid-Open No.2006-148669

### Summary of Invention

### Technical Problem

However, with patent literature 1, there are problems that it is difficult to make a portable radio device smaller because a space has to be kept to provide a ground wire in a casing, and that, with a slide portable radio device in which an antenna and a circuit board overlap in a vertical direction, it is impossible to improve antenna performance for the above reason.

It is therefore an object of the present invention to provide a portable radio device that can be miniaturized, and that, can gain high antenna performance even when an antenna and a circuit board overlap in a vertical direction.

### Solution to Problem

A portal radio device of the present invention employs a configuration to include: a first casing; a second casing attached slidably to the first casing; an antenna which is provided in the second casing; and a conductive section which is flat and which is provided in the first casing, and, in this portable radio device, the conductive section has an insulation section which is provided in a boundary part between a first area which includes at least an area facing the antenna in a vertical direction and a second area which includes the rest area, in a closed state when the first casing and the second casing overlap, to extend in a direction to cross the slide direction.

### Advantageous Effects of Invention

According to the present invention, a portable radio device can be miniaturized, and that, can gain high antenna performance even when an antenna and a circuit board overlap in a vertical direction.

### Brief Description of the Drawings

FIG.1 is a front view of a portable radio device in a closed state according to embodiment 1 of the present invention;
FIG.2 is a front view of a portable radio device in an open state according to embodiment 1 of the present invention;
FIG.3 is a plane view of the first casing according to embodiment 1 of the present invention;
FIG.4 is a front view of a portable radio device in a closed state according to embodiment 2 of the present invention;
FIG.5 is a front view of a portable radio device in a closed state according to embodiment 3 of the present invention; and
FIG.6 is a plane view of the first casing according to embodiment 3 of the present invention.

### Description of Embodiments

Now, embodiments of the present invention will be explained in detail with reference to the accompanying drawings.

### (Embodiment 1)

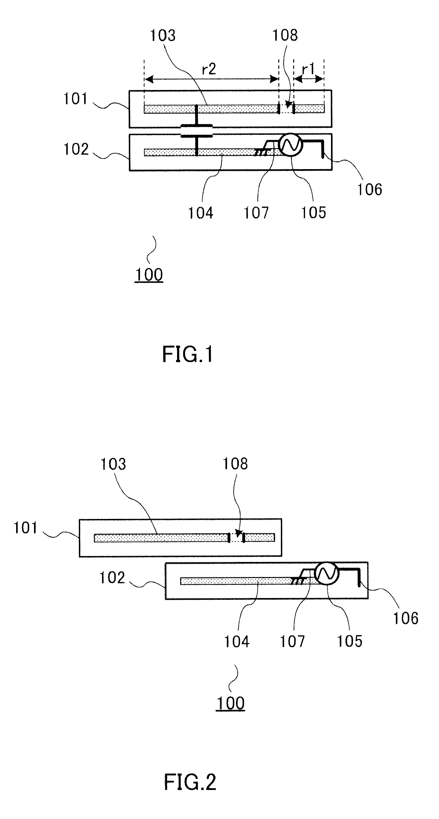

FIG.1 is a front view of portable radio device 100 in a closed state according to the present embodiment. FIG.2 is a front view of portable radio device 100 in an open state according to the present embodiment.

Portable radio device 100 is mainly formed with first casing 101, second casing 102, circuit boards 103 and 104, power feeding section 105, and antenna 106.

Each configuration will be described below.

First casing 101 is formed in a rectangular shape and is slidably attached to second casing 102 to switch from the closed state of FIG.1 to the open state of FIG.2 or to switch from the open state of FIG.2 to the closed state of FIG.1. Thus, first casing 101 is attached to second casing 102 to be able to slide along the lengthwise direction of first casing 101 (a horizontal direction of FIG.1 and FIG.2). First casing 101 switches from the closed state of FIG.1 to an open state by sliding on second casing 102 in a direction to part from antenna 106. First casing 101 has circuit board 103.

Second casing 102 is formed in a rectangular shape and is slidably attached to second casing 102 to switch from the closed state of FIG.1 to the open state of FIG.2 or to switch from the open state of FIG.2 to the closed state of FIG.1. Second casing 102 has circuit board 104, power feeding section 105, and antenna 106.

Circuit board 103 is provided in first casing 101 and a display section such as LCD (not shown) is attached. In the closed state of FIG.1 when first casing 101 and second casing 102 overlap, circuit board 103 has slit 108 in the boundary part between area r1 which includes an area facing antenna 106 in a vertical direction (a vertical direction of FIG.1) and area r2 which includes the rest area. Area r2 of circuit board 103 functions as a passive element by coupling electromagnetically with circuit board 104. Now, details of slit 108 will be described later.

Circuit board 104 is provided in second casing 102, and antenna 105 and power feeding section 106 are provided. Circuit board 104 is electromagnetically coupled with circuit board 103.

Power feeding section 105 is provided in circuit board 104 and feeds power for antenna 106. Power feeding section 105 is provided in an end part which is in a direction to part from first casing 101 of circuit board 104 in an open state, that is, in an end part which does not overlap in a vertical direction with first casing 101 of circuit board 104 in an open state. Ground section 107 of power feeding section 105 is electrically connected to a ground section of circuit board 104.

Antenna 106 is provided in circuit board 104 and is fed power from power feeding section 105. Antenna 106 is provided in an end part which is in a direction to part from first casing 101 of circuit board 104 in an open state, that is, in an end part which does not overlap in a vertical direction with first casing 101 of circuit board 104 in an open state. Antenna 106 is, for example, an antenna for receiving digital television broadcasting.

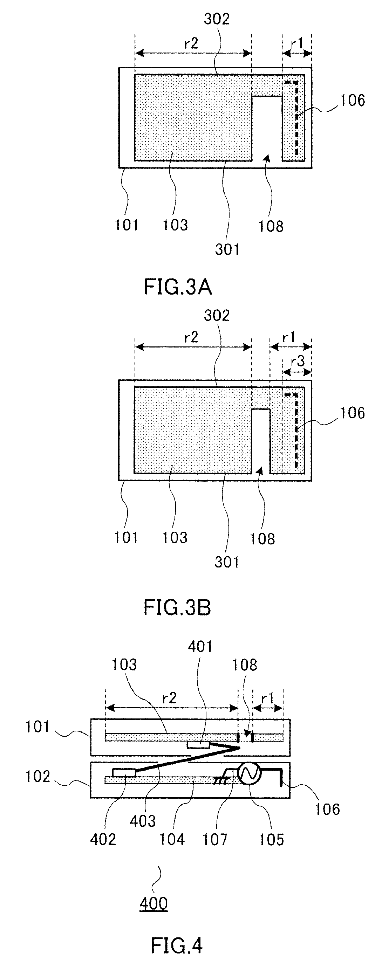

Next, slit 108 provided in circuit board 103 will be described by using FIG.3(a) and FIG.3(b). FIG.3(a) and FIG.3(b) are plane views of first casing 101. Antenna 106 is provided in second casing 102 but in FIG.3(a) and FIG.3(b) is drawn using a broken line to compare with the location of slit 108.

Circuit board 103 is provided over the entire surface of first casing 101 in a plain view. In circuit board 103, slit 108 is formed from end part 301 in a perpendicular direction to a slide direction (a horizontal direction of FIG.3(a) and FIG.3(b)) of first casing 101. Here, slit 108 is provided to separate electrically area r1 of circuit board 103 from circuit board 103. Thus, the slit is not mandatory, and as long as an insulation section is provided it is possible to gain the effect of the present embodiment. With the present embodiment, a case will be described where slit 108 is provided as one example of an insulation section.

In circuit board 103, slit 108 is provided to extend from end part 301 in a perpendicular direction to a slide direction of first casing 101. Slit 108 is a through hole to penetrate circuit board 103 in a thickness direction (a perpendicular direction to the sheet of FIG.3(a) and FIG.3(b)). With circuit board 103, slit 108 is provided in the boundary part between area r1, which includes an area facing antenna 106 in a vertical direction in a closed state, and area r2 which includes the rest area. Here, in the closed state of FIG.1 when first casing 101 and second casing 102 overlap, both cases are possible where area r1 which faces antenna 106 in a vertical direction (a vertical direction of FIG.1) and an area which faces antenna 106 in a vertical direction (a vertical direction of FIG.1) are equal, and where as shown in FIG.3 (b), area r1 includes area r3, which faces antenna 106 in a vertical direction (a vertical direction of FIG.1), as a part. Slit 108 does not necessarily have to extend from end part 301, but it is equally possible to extend from end part 302 in a perpendicular direction to a slide direction of first casing 101.

In portable radio device 100 which has the above configuration, slit 108 is provided, so that, as shown in FIG.1, it is possible to separate electrically area r1 which faces antenna 106 in a vertical direction from area r2 in a closed state.

Therefore, according to the present embodiment, by providing a slit and electrically separating the area of the circuit board which faces an antenna in a vertical direction, the impedance of the area of the circuit board which faces an antenna in a vertical direction can be increased, so that it is possible to reduce deterioration of a radiation resistance of antenna and gain high antenna performance. The present embodiment has only to provide a slit on a circuit board and does not even require any space to arrange a component for improving antenna performance, so that miniaturization can be realized. The present embodiment can improve antenna performance only by providing a slit on a circuit board, so that it is possible to minimize the reduction of footprint of a circuit board in association with an improvement of antenna performance. The present embodiment can prevent deterioration of an antenna performance due to an area which faces to an antenna of a circuit board in a vertical direction, so that it is possible to use actively an area which does not face an antenna of a circuit board as a passive element. According to the present embodiment, in an open state, the first casing does not face an antenna in a vertical direction and can improve antenna performance, so that in both open and closed state, it is possible to achieve good antenna performance.

Although with the present embodiment the slit is formed to penetrate a circuit board in a thickness direction, the present embodiment is not limited to this, and it is equally possible to form an insulation section instead of the slit by removing a conductive section in the location to form the slit on a circuit board.

### (Embodiment 2)

FIG.4 is a front view of portable radio device 400 in a closed state according to embodiment 2 of the present invention.

Portable radio device 400 shown in FIG.4 adds connecting part 401, connecting part 402, and connecting cable section 403 to portable radio device 100 according to embodiment 1 shown in FIG.1. Also, parts in FIG.4 that are the same as in FIG.1 will be assigned the same reference numerals as in FIG.1 and overlapping descriptions will be omitted.

Circuit board 103 is provided in first casing 101 and operates as a passive element, and also a display section such as LCD (not shown) is attached. In the closed state of FIG.1 when first casing 101 and second casing 102 overlap, circuit board 103 has slit 108 in the boundary part between area r1 which includes an area facing antenna 106 in a vertical direction (a vertical direction of FIG.1) and area r2 which includes the rest area. Circuit board 103 has connecting part 401. Circuit board 103 has slit 108 between antenna 106 and connecting part 401 (described later) and between antenna 106 and connecting part 402 (described later). In the closed state of FIG.4, area r2 of circuit board 103 functions as a passive element by coupling electromagnetically with circuit board 104. The slit is not mandatory, and, as the above embodiment 1, as long as an insulation section is provided it is possible to gain the effect of the present embodiment.

Circuit board 104 is provided in second casing 102, and power feeding section 105 and antenna 106 are provided. Circuit board 104 has connecting part 402.

Connecting part 401 is, for example, a connector and is provided in area r2 in circuit board 103. Also, connecting part 401 electrically connects a ground section of circuit board 103 and connecting cable section 403.

Connecting part 402 is, for example, a connector, and is provided in circuit board 104. Also, connecting part 402 electrically connects a ground section of circuit board 104 and connecting cable section 403.

Connecting cable section 403 is made from a flexible material, and electrically connects connecting part 401 and connecting part 402. Connecting cable section 403 connects electrically a ground section of circuit board 103 and a ground section of circuit board 104, and that, for example, transmits a signal which is processed in a radio circuit (not shown) provided in circuit board 104 to a display section (not shown) provided in circuit board 103. A front view of portable radio device 400 in an open state is the same as FIG.2 except that connecting section 401, connecting section 402, and connecting cable section 403 are provided, and a plane view of first casing 101 are the same as FIG.3, so that overlapping descriptions will be omitted.

In portable radio device 400 which has the above configuration, a ground section of circuit board 103, connecting cable section 403, and a ground section of circuit board 104 are electrically connected, so that they function as a bottom board of antenna 106. In this case, area r1 of circuit board 103 can be electrically separated by slit 108.

Therefore, according to the present embodiment, in addition to the effect of the above embodiment 1, by electrically connecting circuit boards with each other by using a connecting cable, it is possible to gain high antenna performance even if the power of electromagnetic coupling between the circuit boards is large. According to the present embodiment, it is possible to form an antenna which has a given electrical length without deteriorating antenna performance, with a ground section of an area which does not face a circuit board of the first casing, a connecting cable section, and a ground section of a circuit board of the second casing.

Although with the present embodiment the slit is formed to penetrate a circuit board in a thickness direction, the present embodiment is not limited to this, and it is equally possible to form an insulation section instead of the slit by removing a conductive section in the location to form the slit on a circuit board.

### (Embodiment 3)

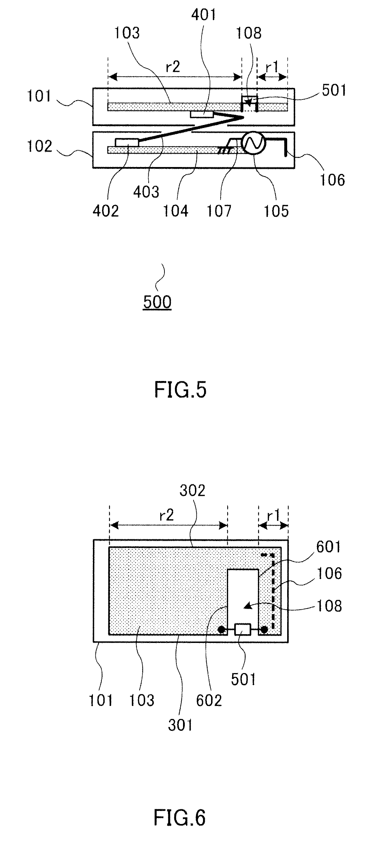

FIG.5 is a front view of portable radio device 500 in a closed state according to embodiment 3 of the present invention.

Portable radio device 500 shown in FIG.5 adds reactance element 501 to portable radio device 400 according to embodiment 2 shown in FIG.4. Also, parts in FIG.5 that are the same as in FIG.1 and FIG.4 will be assigned the same reference numerals as in FIG.1 and FIG.4 and overlapping descriptions will be omitted.

Circuit board 103 is provided in first casing 101 and operates as a passive element, and also a display section such as LCD (not shown) is attached. In the closed state of FIG.5 when first casing 101 and second casing 102 overlap, circuit board 103 has slit 108 in the boundary part between area r1 which faces to antenna 106 in a vertical direction (a vertical direction of FIG.5) and area r2 which includes the rest area. Circuit board 103 has connecting part 401. Circuit board 103 has slit 108 between antenna 106 and connecting part 401 (described later) and between antenna 106 and connecting part 402. In the closed state of FIG.5, area r2 of circuit board 103 functions as a passive element by coupling electromagnetically with circuit board 104. Circuit board 103 has reactance element 501 which is attached over slit 108.

Reactance element 501 connects between end parts which oppose each other and which form slit 108 of a circuit board, and adjusts an electrical length of an antenna of circuit board 103. For example, reactance element 501 optimizes circuit constant to let area r1 of circuit board 103 function as a passive element in a closed state, and adjusts an electrical length in circuit board 103.

Next, slit 108 provided in circuit board 103 will be described by using FIG.6. FIG.6 is a plane view of first casing 101. Antenna 106 is provided in second casing 102 but in FIG.6 is drawn using a broken line to compare with the location of slit 108. Also, parts in FIG.6 that are the same as in FIG.3 will be assigned the same reference numerals as in FIG.3 and overlapping descriptions will be omitted. Also, in FIG.6, as the above embodiment 1, in the closed state of FIG.5 when first casing 101 and second casing 102 overlap, there are cases where area r1, which includes as a part an area facing antenna 106 in a vertical direction (a vertical direction of FIG.5), includes an area facing antenna 106 in a vertical direction (a vertical direction of FIG.5).

Reactance element 501 connects a ground section of end part 601 and a ground section of end part 602 which oppose each other and which form slit 108 of circuit board 103.

Therefore, according to the present embodiment, in addition to the effect of the above embodiment 1, it is possible to optimize antenna performance by providing a reactance element which connects between end parts forming the slit of a circuit board and adjusting an electrical length of a circuit board.

With the present embodiment, the reactance can be changed by using variable reactive elements, or by switching between multiple reactive elements with a switch. For example, it is possible to detect an open state and a closed state to change the reactance of a reactance element based on the detected state, or the designer may adjust a reactance element each time to provide the given reactance.

Although with the above embodiment 1 - embodiment 3 the slit is formed to extend from one end part of a circuit board in a perpendicular direction to a slide direction of first casing 101, the present invention is not limited to this, and it is equally possible to extend and form the slit in an arbitrary direction from one end part of a circuit board as long as it is in a direction to cross the slide direction of first casing 101. Although with the above embodiment 1 - embodiment 3 the slit is formed from one end part of a circuit board, the present invention is not limited to this, and it is possible to extend and form the slit in a direction to cross the slide direction from an arbitrary location of a circuit board. Although with the above embodiment 1 - embodiment 3 the slit is formed in a circuit board, the present invention is not limited to this, and it is equally possible to form the slit in a metal chassis for maintaining strength, in a metal case, or in an arbitrary conductive section which is close to an antenna other than a circuit board such as a sheet metal.

The disclosure of Japanese Patent Application No.2008-334010, filed on December 26, 2008 including the specification, drawings and abstract, is incorporated herein by reference in its entirety.

### Industrial Applicability

A portable radio device of the present invention is especially suitable for a portable radio device which connects a plurality of casings in a mutually slidable fashion and which is placed in an open state and a closed state in accordance with slide operations.

## Claims

1. A portal radio device comprising:
a first casing;
a second casing which is slidably attached to the first casing;
an antenna which is provided in the second casing;
and a conductive section which is flat and which is provided in the first casing, wherein the conductive section has an insulation section which is provided in a boundary part between a first area which includes at least an area facing the antenna in a vertical direction and a second area which includes the rest area, in a closed state when the first casing and the second casing overlap, to extend in a direction to cross the slide direction.

2. The portal radio device according to claim 1, wherein the conductive section is a circuit board.

3. The portal radio device according to claim 1, further comprising:
a circuit board which is provided in the second casing and which has the antenna; and
a connecting section which electrically connects a ground section of the second area and a ground section of the circuit board.

4. The portal radio device according to claim 1, wherein the insulation section is a slit which penetrates the conductive section in a thickness direction.

5. The portal radio device according to claim 4, further comprising a reactance element which electrically connects between end parts forming the slit of the conductive section.

6. The portal radio device according to claim 1, wherein the first casing slides on the second casing in a direction to part from the antenna.
